Europäisches Patentamt

European Patent Office

Office européen des brevets

(11) Publication number: **0 375 118**
**A2**

## EUROPEAN PATENT APPLICATION

(21) Application number: **89309945.7**

(22) Date of filing: **29.09.89**

(51) Int. Cl.5 **B63G 8/42**

(30) Priority: **30.09.88 GB 8822934**

(43) Date of publication of application:
**27.06.90 Bulletin 90/26**

(84) Designated Contracting States:
**AT BE DE NL SE**

(71) Applicant: **WYATT, Roy**
**4 Canterbury Close**
**Lee-on-Solent, Hampshire(GB)**

(72) Inventor: **WYATT, Roy**
**4 Canterbury Close**
**Lee-on-Solent, Hampshire(GB)**

(74) Representative: **Boutland, John Anthony et al**
**Prudential Buildings Room 24 97-101 Above**
**Bar Street**
**Southampton SO9 4GT Hampshire(GB)**

(54) **Improvements in or relating to couplings for reducing the transfer of vibration forces.**

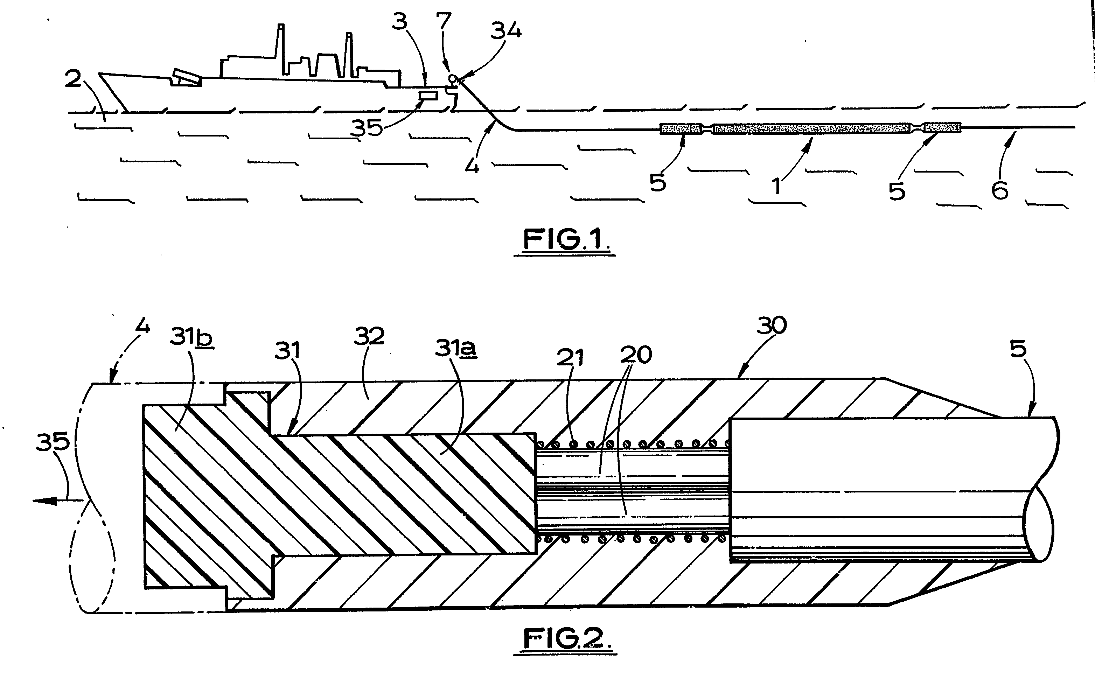

(57) With reference to Figure 1, an array 1, which is suitable for geophysical survey purposes, is towed through water 2 by a vessel 3. The array 1 is connected to a towing cable 4 by way of a vibration isolating coupling 5.

As shown in Fire 3, the coupling 5, which allows the passage of electrical power and electronic signals between the vessel 3 and the array 1, comprises one or more juxtaposed rope lengths 20, an electrical signal conveying conductor 21 wound around the rope lengths 20 and buoyancy material enclosing both the rope lengths 20 and the conductor 21.

FIG.1.

## "Improvements in or relating to Couplings for Reducing the Transfer of Vibration Forces"

This invention relates to couplings for reducing the transfer of vibration forces and is particularly concerned with the transfer of fibration forces between a marine towing vessel and a structure towable thereby.

Such structure include towable arrays of filamentary form whereby water-borne sound waves generated for geophysical survey purposes may be sensed.

Co-pending U.K. patent Application No. 88.04314, filed 24th February 1988, discloses such a towable array, and the present invention is particularly suited to the towing thereof.

One object of the invention is to provide a coupling for reducing the transfer of vibration forces between a towing vessel and a structure towable thereby, whilst allowing the passage of electrical signals between the vessel and the structure.

As used herein, the term "electrical signals" is intended to include electronic signals and the flow of electrical power.

According to the invention, a coupling for reducing the transfer of vibration forces between a towing vessel and a structure towable thereby, whilst allowing the passage of electrical signals between the vessel and the structure, comprising at least one length of resilient material, at least one signal conveying conductor wound around the length, and buoyancy material enclosing both the length and the conductor.

A connector may be used to secure together one end of the resilient length, and the connector and said one end may be enclosed in a first body of plastics material.

The towable structure preferably comprises an array of filamentary form having a body and a plurality of sensors distributed within the body.

An embodiment of the invention will now be described by way of example only, with reference to the accompanying drawings, wherein :-

Figure 1 illustrates the towing of a sound-wave sensing array through water, and

Figures 2 and 3 are fragmentary side views to enlarged scales, of one of the couplings 5 of Figure 1.

With reference first to Figure 1, a structure in the form of a water-borne sound-wave sensing array 1 of filamentary form is shown being towed through water 2 by a marine craft comprising a surface vessel 3. The array 1 is towed through the water for geophysical survey purposes, being used to sense sound waves resulting from applying shock loads to the sea bed. The array 1 is connected to a towing cable 4 by way of a vibration isolation coupling 5. A rope tail 6, which reduces any tendency for the array to "snake", is normally (but not necessarily) connected to the rear end of the array 1 by way of another vibration isolation coupling 5.

The towing cable 3 is connected to a winch 7 carried by the vessel 3.

The array 1 is of the form disclosed by U.K. Patent Application No. 88.04314, filed 24th February 1988.

Briefly, the array 1 comprises a cylindrical body of circular cross-section housing a central, longitudinally-extending reinforcement member which is formed and constructed as a strain member so as to accept towing loads applied to the array. Sensors are distributed within the body of the array, in the proximity of the external surface thereof.

As the array 1 of this embodiment is a sound-wave sensing array, the above-mentioned sensors comprise hydrophones, although alternatively, or in addition, the array may carry sensors whereby, for example, water depth of the array, ambient water temperature and towing loads may be sensed

Conductor leads connect the sensors and/or associated electronic equipment with the central reinforcement/strain member which also serves as a databus whereby output signals emitted by the sensors are conveyed (via towing cable 4 and slip rings 34) to monitoring and power supply equipment 35 carried by the towing vessel 3. The centrally-disposed member is also used to convey electrical power to the array 1.

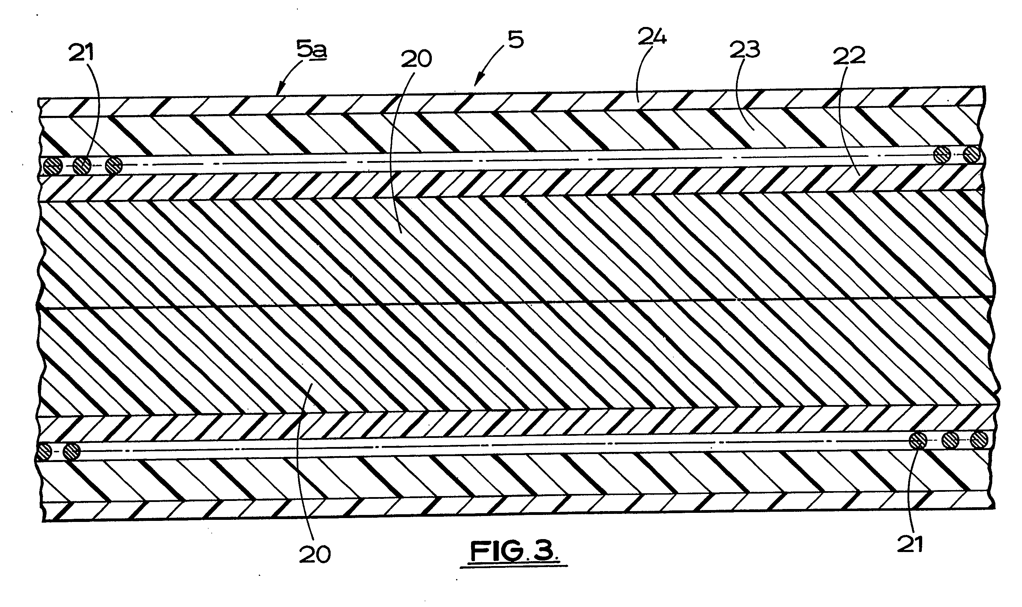

With reference now to Figure 3, the body 5a of each coupling 5 comprises two lengths 20 of resilient material (rope) extending in substantially parallel array. Electrical signal (as above defined) conveying conductors 21 of coaxial form are wound around the lengths 20 in a helical manner. A sheath 22 of resilient material encloses the lengths 20 and separates them from the conductors 21. Buoyancy material 23 encloses both the lengths 20 and the conductors 21. The buoyancy material 23 itself is enclosed in a sheath 24. The conductors 21 are connected, through an intermediate connection (not shown) to the towing cable 4/slip rings 34. Opposite ends of the conductors 21 are connected, by way of the above-mentioned centrally-disposed member of the array 1, to the sensors carried thereby.

The lengths 20 comprise 8mm diameter ropes of synthetic fibre material. (Nylon - Registered Trade Mark). The sheaths 22, 24 are of plastics material. (Polyurethane). The buoyancy material 23 is a closed-cell material formed by a plurality of glass microspheres imbedded in a polyether propolymer elastomer.

The glass microspheres have a normal density of 0. 23/g/cubic centimetre and a compression strength of 500 lbs/square inch.

The elastomer has a tensile strength of 25 MN/M·M and a tear strength of 42 KN/M·M.

The composite mass 23 has a density of 0.72/g/cubic centimetre and is bonded to adjacent portions of the body 5a.

The array 1 is also provided with buoyancy material 23.

The mass 23 not only provides the coupling 5 and array 1 with buoyancy in an efficient manner, it also provides excellent resistance to the towing loads applied to the coupling and array as well as excellent resistance to hydrostatic pressures.

The end of the coupling 5 remote from the array 1 is secured to the towing cable 4 by way of a connection 30. (Figure 2). The connection 30 comprises a connector 31 of plastics material (polyethylene), having an end 31a which receives the adjacent ends of the rope lengths 20 and electrical conductors 21. The ends of the rope lengths are firmly anchored to the coupling 30. The ends of the conductors 21 terminate at a plug and socket assembly (not shown) housed within end 3lb of the connector 31. The assembly forms one of the intermediate connections mentioned above.

The connection 30 also comprises a moulded body 32 of polyethylene plastics material enclosing the adjacent ends of the coupling 5, rope lengths 20 and conductors 21 as well as the connector 31, and adjacent end of the towing cable 4.

Similar connections 30 are used to connect the coupling 5 to the array 1.

In operation, towing loads 35 are transferred from the array and through the coupling 5, to be received by the vessel 3. The inherent resilience of the rope lengths 20 reduces the transfer of vibrations generated by the towing vessel 3 to the array 1, while accepting the towing loads. This is done without subjecting the electrical signal conductors 21 to undue loads.

. The volume of buoyancy material 23 can be varied, in order to suit operating requirements.

The invention provides an efficient, vibration-reducing coupling, capable of operating at depths greater than those wherein oil-filled structures can be employed.

With reference to Figure 3, in a modification, the outer sheath 24 can be dispensed with, if circumstances allow.

Further modifications comprise the use of only one rope length 20 and/or only one conductor 21.

The towing cable 4 may comprise an extension of the rope length(s) 20.

## Claims

1. A coupling for reducing the transfer of vibration forces between a towing vessel and a structure towable thereby, whilst allowing the passage of electrical signals between the vessel and the structure, comprising at least one length of resilient material, at least one signal conveying conductor wound around the length, and buoyancy material enclosing both the length and the conductor.

2. A coupling as claimed in Claim 1, wherein the resilient length is of synthetic fibre material.

3. A coupling as claimed in Claim 1 or 2, wherein a connector is used to secure one end of the resilient length, and the connector and said end are enclosed in a body of plastics material.

4. A coupling as claimed in Claim 2 or 3, wherein the body comprises a moulding of plastics material.

5. A coupling as claimed in any one of Claims 1 to 4, wherein the buoyancy material is cellular.

6. The combination of a towable structure and a coupling as claimed in any one of Claims 1 to 5.

7. The combination of Claim 6, wherein the towable structure comprises an array of filamentary form having a body and a plurality of sensors distributed within the body.

8. A towable structure (e.g. an array or coupling), comprising a body housing a buoyancy-giving mass of cellular material.

9. A towable structure as claimed in Claim 8, wherein the cellular material comprises a plurality of microspheres imbedded in an elastomer.

10. A towable structure as claimed in ClAm 9, wherein the microspheres are of glass.

11. A towable structure as claimed in Claim 9 or 10, wherein the elastomer comprises a syntactic polymer, such as polyether polymer.

EP 0 375 118 A2

FIG.1.

FIG.2.

FIG.3.

EP 0 375 118 A2